# EUROPEAN PATENT APPLICATION

(11) **EP 4 467 788 A1**
(43) Date of publication of application: **27.11.2024**
(21) Application number: 23461594.6
(22) Date of filing: 23.05.2023
(51) Int. Cl.: F02C 3/22, F02C 7/224, F02C 6/00, F02C 7/141, F02C 7/16

(54) **HYDROGEN FUEL SYSTEM ARCHITECTURE WITH OXYGEN SEPARATION**

(71) Applicant: Hamilton Sundstrand Corporation, Charlotte, NC 28217 (US)
(72) Inventor: KRUCZEK, Grzegorz, Gliwice, 44-100 (PL); RIDOUANE, El Hassan, Cork, P31 E670 (IE); CAO, Changmin, Cork, T12 XP76 (IE)
(74) Representative: Dehns

(57) **Abstract**

A system 100 comprising: a gas turbine 110 having a combustion chamber 114; a first heat exchanger HX1 configured to receive a first stream of compressed air CA1 and a stream of liquid hydrogen LH, wherein the first heat exchanger HX1 is configured to transfer heat between the first stream of compressed air CA1 and the stream of liquid hydrogen LH to yield a stream of liquid oxygen LO and a stream of gaseous hydrogen GH; and a second heat exchanger HX2 configured to receive the stream of liquid oxygen LO and a second stream of compressed air CA2, wherein the second heat exchanger HX2 is configured to transfer heat between the second stream of compressed air CA2 and the stream of liquid oxygen LO to yield a stream of gaseous oxygen GO; wherein the system is configured to direct the stream of gaseous hydrogen GH and the stream of gaseous oxygen GO to the combustion chamber 114.

## Description

### FIELD

The subject-matter disclosed herein relates to hydrogen fuel systems, and in particular to hybrid fuel cell gas turbine systems.

### BACKGROUND

There is an increasing pressure on the aerospace industry to switch the primary fuel for aircraft from hydrocarbons to more sustainable energy sources such as hydrogen. Hybrid fuel cell gas turbine systems, for example, comprise low-temperature fuel cells (e.g. proton exchange membrane fuel cells (PEMFC)) that can increase fuel-to-electricity conversion efficiency and lower emissions of greenhouse gases. However, it is desirable to further increase efficiency and reduce emissions of these systems. The examples disclosed herein relate to such hydrogen fuel systems.

### SUMMARY

According to one aspect, there is provided a system comprising: a gas turbine having a combustion chamber; a first heat exchanger configured to receive a first stream of compressed air and a stream of liquid hydrogen, wherein the first heat exchanger is configured to transfer heat between the first stream of compressed air and the stream of liquid hydrogen to yield a stream of liquid oxygen and a stream of gaseous hydrogen; and a second heat exchanger configured to receive the stream of liquid oxygen and a second stream of compressed air, wherein the second heat exchanger is configured to transfer heat between the second stream of compressed air and the stream of liquid oxygen to yield a stream of gaseous oxygen; wherein the system is configured to direct the stream of gaseous hydrogen and the stream of gaseous oxygen to the combustion chamber.

In the following, it should be understood that where the system is 'configured to direct' streams of fluids, the system comprises suitable conduits fluidly connected in such a manner as to facilitate the described path of the fluid stream.

The combustion chamber may be configured to combust the stream of gaseous hydrogen and the stream of gaseous oxygen.

The system may comprise a source of liquid hydrogen (e.g. a tank).

The system may comprise a compressor configured to generate the first stream of compressed air and the second stream of compressed air.

The system may comprise a fuel cell, and the system may be configured to: direct a first portion of the stream of gaseous hydrogen to the combustion chamber; and direct a second portion of the stream of gaseous hydrogen to the fuel cell.

The system may be configured to direct the second stream of compressed air from the second heat exchanger to the fuel cell. Alternatively, the system may be configured to direct a stream of (optionally compressed) ambient air or bleed air to the fuel cell.

The system may be a hydrogen fuel system. The system may be a hybrid fuel cell gas turbine system comprising a fuel cell and a gas turbine. The system may be for providing propulsion to a vehicle, such as an aircraft.

The system may be configured to direct a stream of residual hydrogen from the fuel cell to the combustion chamber.

The system may be configured to direct a stream of residual air from the fuel cell to a turbine of the gas turbine.

The system may comprise a coolant circuit configured to absorb heat from (components of) the gas turbine and/or the fuel cell. For example, the coolant circuit may be configured to control the temperature of (e.g. cool) at least one of the fuel cell, an electric motor configured to provide power to the turbine, the turbine, the combustion chamber, and the compressor, as well as any other heat sources from other systems in the vehicle (e.g. aircraft). The coolant circuit may comprise an ambient heat exchanger configured to transfer heat from the coolant circuit to the ambient atmosphere. The coolant circuit may be a closed loop.

The coolant circuit may comprise a third heat exchanger; wherein the system is configured to direct the stream of gaseous oxygen from the second heat exchanger to the combustion chamber via the third heat exchanger; and wherein the third heat exchanger is configured to transfer heat between the coolant circuit and the stream of gaseous oxygen (to thereby, for example, control the temperature of (e.g. heat) the stream of gaseous oxygen).

The coolant circuit may comprise the second heat exchanger. The second heat exchanger may be configured to transfer heat between the coolant circuit and at least one of the streams in the second heat exchanger.

The first heat exchanger may be configured to transfer heat between the first stream of compressed air and the stream of liquid hydrogen to yield a stream of liquid oxygen, a stream of gaseous hydrogen, and a stream of gaseous nitrogen.

The system may be configured to direct the stream of gaseous nitrogen to the second heat exchanger, wherein the second heat exchanger is configured to transfer heat between the stream of gaseous nitrogen and at least one of the streams in the second heat exchanger.

The system may be configured to direct the stream of gaseous nitrogen to a fire suppression system. For example, the stream of gaseous nitrogen may be used as a fire suppression agent (e.g. to put out fires) or a fire prevention agent (e.g. to cool down components at risk of catching fire).

The system may be configured to direct the stream of gaseous nitrogen to the source of liquid hydrogen (e.g. a tank) for temperature control (e.g. cooling) of the source of liquid hydrogen.

The system may be configured to direct the stream of gaseous nitrogen to vehicle electronics for temperature control (e.g. cooling) of the vehicle electronics. In other words, the vehicle comprising the hydrogen fuel system may utilise the stream of gaseous nitrogen to cool its electronic components and/or superconducting electronic components.

The system may be configured to direct the stream of gaseous nitrogen to turbine blades of (a turbine of) the gas turbine for temperature control (e.g. cooling) of the turbine blades.

In one example, the system may be configured to direct the stream of gaseous nitrogen to the source of liquid hydrogen for temperature control of the source of liquid hydrogen, from the source of liquid hydrogen to the second heat exchanger, wherein the second heat exchanger is configured to transfer heat between the stream of gaseous nitrogen and at least one of the streams in the second heat exchanger, and from the second heat exchanger to the fire suppression system.

According to another aspect, there is provided a method comprising: directing a first stream of compressed air and a stream of liquid hydrogen to a first heat exchanger; transferring heat, using the first heat exchanger, between the first stream of compressed air and the stream of liquid hydrogen to yield a stream of liquid oxygen and a stream of gaseous hydrogen; directing the stream of liquid oxygen and a second stream of compressed air to a second heat exchanger; transferring heat, using the second heat exchanger, between the second stream of compressed air and the stream of liquid oxygen to yield a stream of gaseous oxygen and to cool the second stream of compressed air; and directing the stream of gaseous oxygen and the stream of gaseous hydrogen to a combustion chamber of a gas turbine.

The method may comprise combusting, using the combustion chamber, the stream of gaseous hydrogen and the stream of gaseous oxygen.

The method may comprise directing the stream of liquid hydrogen to the first heat exchanger from a source of liquid hydrogen (e.g. a tank).

The method may comprise generating, using a compressor, the first stream of compressed air and the second stream of compressed air. For example, the compressor may be used to generate a preliminary stream of compressed air that is split into the first stream and the second stream.

The method may comprise: directing a first portion of the stream of gaseous hydrogen from the first heat exchanger to the combustion chamber; and directing a second portion of the stream of gaseous hydrogen from the first heat exchanger to a fuel cell.

The method may comprise directing the second stream of compressed air from the second heat exchanger to the fuel cell. Alternatively, the system may be configured to direct a stream of (optionally compressed) ambient air or bleed air to the fuel cell.

The method may comprise directing a stream of residual hydrogen from the fuel cell to the combustion chamber.

The method may comprise directing a stream of residual air from the fuel cell to a turbine of the gas turbine.

The method may comprise providing a coolant circuit configured to absorb heat from (components of) the gas turbine and/or the fuel cell, wherein the coolant circuit comprises a third heat exchanger; directing a stream of gaseous oxygen from the second heat exchanger to the combustion chamber via the third heat exchanger; and transferring, using the third heat exchanger, heat between the coolant circuit and the stream of gaseous oxygen (to thereby, for example, control the temperature of (e.g. heat) the stream of gaseous oxygen).

The method may comprise providing a coolant circuit configured to absorb heat from the components of the gas turbine and/or the fuel cell, wherein the coolant circuit comprises the second heat exchanger; and transferring heat, using the second exchanger, between the coolant circuit and at least one of the streams in the second heat exchanger.

The method may comprise transferring heat, using the first heat exchanger, between the first stream of compressed air and the stream of liquid hydrogen to yield a stream of liquid oxygen, a stream of gaseous hydrogen, and a stream of gaseous nitrogen.

The method may comprise directing the stream of gaseous nitrogen to the second heat exchanger; and transferring heat, using the second exchanger, between the stream of gaseous nitrogen and at least one of the streams in the second heat exchanger.

The method may comprise directing the stream of gaseous nitrogen to a fire suppression system. For example, the stream of gaseous nitrogen may be used as a fire suppression agent (e.g. to put out fires) or a fire prevention agent (e.g. to cool down components at risk of catching fire).

The method may comprise directing the stream of gaseous nitrogen to the source of liquid hydrogen (e.g. a tank) for temperature control (e.g. cooling) of the source of liquid hydrogen.

The method may comprise directing the stream of gaseous nitrogen to vehicle electronics for temperature control (e.g. cooling) of the vehicle electronics. In other words, the method may comprise directing the stream of gaseous nitrogen to (superconducting) electronic components of the vehicle (e.g. aircraft) comprising the hydrogen fuel system.

The method may comprise directing the stream of gaseous nitrogen to turbine blades of (a turbine of) the gas turbine for temperature control (e.g. cooling) of the turbine blades.

In one example, the method may comprise: directing the stream of gaseous nitrogen to the source of liquid hydrogen for temperature control of the source of liquid hydrogen; directing the stream of gaseous nitrogen from the source of liquid hydrogen to the second heat exchanger, wherein the second heat exchanger is configured to transfer heat between the stream of gaseous nitrogen and at least one of the streams in the second heat exchanger; and directing the stream of gaseous nitrogen from the second heat exchanger to the fire suppression system.

The foregoing features, elements and aspects may be combined in various combinations without exclusivity, unless expressly indicated otherwise. For example, any or all of the foregoing aspects of the disclosed methods may be provided by the foregoing aspects of the disclosed systems, and vice versa.

### BRIEF DESCRIPTION OF THE DRAWINGS

Figure 1 shows a first example of a hydrogen fuel system architecture.
Figure 2 shows a second example of a hydrogen fuel system architecture.
Figure 3 shows a third example of a hydrogen fuel system architecture.

### DETAILED DESCRIPTION

There is an increasing pressure on the aerospace industry to switch the primary fuel used for aircraft from hydrocarbons to more sustainable energy sources such as hydrogen. This, however, brings many challenges. The systems described herein aim to take advantage of the new technologies of cryogenic compressed hydrogen and liquid hydrogen storage. In particular, the new systems described herein utilise the chill that is associated with cryogenic fluid.

The new systems described herein envision a way to use liquid H₂ onboard an aircraft as an additional heat sink to separate oxygen and nitrogen from part of the air in system. More specifically the systems use a new architecture of hybrid gas turbine and fuel cell operation with an oxygen and nitrogen separation process.

In order to reach a manageable H₂ volume, it must either be highly compressed and cooled (between 300-850 bar and <78K) or cryogenically cooled to liquid state (--253°C = ~20K ).

The use of liquid hydrogen (LH) is more promising in terms of weight and volume when compared to compressed hydrogen (CH) and represents the only way to enable hydrogen-based short and medium range and bigger type of aircrafts.

The low storage temperature of liquid hydrogen fuel allows it to be used to cool air to condense oxygen and effectively separate it from nitrogen. Advantageously, the separated oxygen can be combusted with hydrogen in oxy-fuel combustion at very high temperatures which increases the efficiency of gas turbine. The absence of nitrogen in the combustion chamber avoids the generation of harmful emissions. Furthermore, the separated nitrogen can be used as a cooling medium (e.g. for cooling one or more of a tank of liquid hydrogen fuel, electronics, superconducting electronics, turbine blades, etc), as a fire suppression agent, and/or as a neutral gas for fire protection.

Thus, the described configurations allow for the use of high efficiency oxy-fuel combustion and additionally the production of nitrogen which can be used as a fire suppressant or fire protection gas. Part of the hydrogen that was used to condense oxygen is combusted in a combustion chamber along with oxygen and the rest, along with a second portion of air, may optionally also be used in fuel cell for a hybrid fuel cell gas turbine configuration.

The separation process of the new systems described herein are possible due to the fact that the oxygen boiling point is at 90.2K which is significantly higher than temperature of liquid hydrogen (-20K). Moreover, the nitrogen boiling point is at 77.4K which gives a range of temperatures where liquid oxygen and gaseous nitrogen exist (77.4K to 90.2K).

For improved functioning of the hydrogen-engine, or improved functioning of a fuel cell, the hydrogen fuel needs to reach higher temperatures (> 0°C = 273K). The described configurations provide a means to increase the hydrogen temperature, whilst simultaneously producing high purity oxygen (e.g. comprising at least 95 mol.% oxygen) for oxy-fuel combustion.

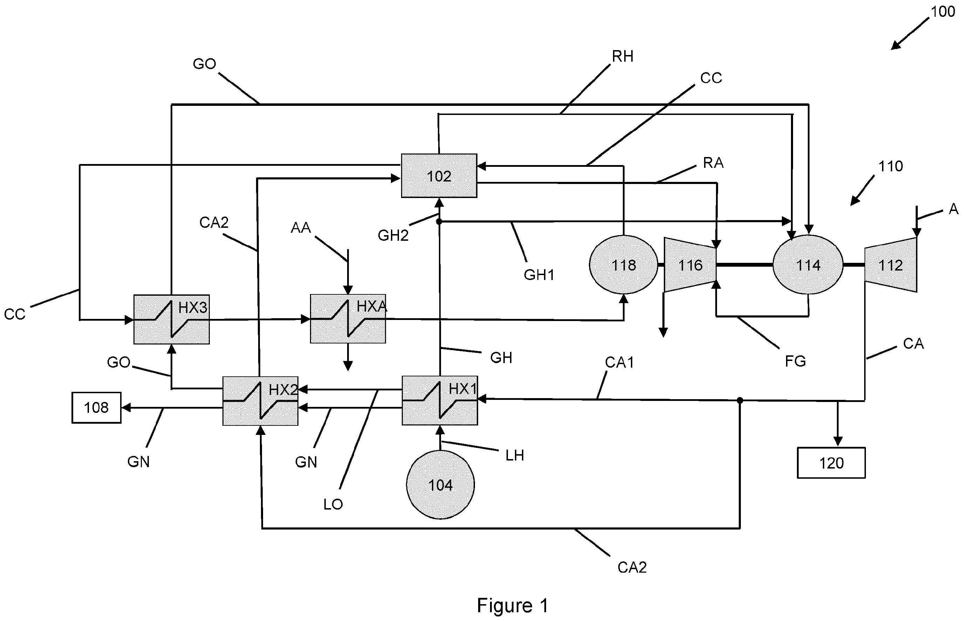

An architecture for a hydrogen fuel system 100 is shown in Figure 1. The hydrogen fuel system 100 shown in Figure 1 is a hybrid fuel cell gas turbine system comprising a fuel cell 102 and a gas turbine engine 110. In the example shown in Figure 1, the hydrogen fuel system 100 is arranged in an aircraft (not shown) to provide electricity and propulsion to the aircraft.

As shown in Figure 1, the hydrogen fuel system 100 comprises a tank 104 as a source of liquid hydrogen. As also shown in Figure 1, the hydrogen fuel system 100 comprises a compressor 112 configured to compress air A, such as ambient air or bleed air, to provide a stream of compressed air CA.

The hydrogen fuel system 100 comprises at least a first heat exchanger HX1 and a second heat exchanger HX2. The first heat exchanger HX1 is configured to receive a first stream of compressed air CA1 (a first portion of the stream of compressed air CA from the compressor 112) and a stream of liquid hydrogen LH from the tank 104. The first heat exchanger HX1 is configured to transfer heat between the first stream of compressed air CA1 and the stream of liquid hydrogen LH to yield a stream of liquid oxygen LO and a stream of gaseous hydrogen GH.

Valves (not shown) regulate the rate of flow of the first stream of compressed air CA1 and rate of flow of the stream of liquid hydrogen LH. The rate of flow of the first stream of compressed air CA1 is selected based on an oxygen demand of the gas turbine engine 110. The rate of flow of the stream of liquid hydrogen LH is selected based on a combined hydrogen demand of the fuel cell 102 and the gas turbine engine 110.

The second heat exchanger HX2 is configured to receive at least a stream of liquid oxygen LO and a second stream of compressed air CA2 (a second portion of the stream of compressed air CA from the compressor 112). The second heat exchanger HX2 is configured to transfer heat between the second stream of compressed air CA2 and the stream of liquid oxygen LO to yield a stream of gaseous oxygen GO.

The gas turbine engine 110 comprises a combustion chamber 114. The system 100 is configured to direct the stream of gaseous oxygen GO and a stream of gaseous hydrogen GH to the combustion chamber 114. In the example shown in Figure 1, the system 100 is configured to direct a first stream of gaseous hydrogen GH1 (a first portion of the stream of gaseous hydrogen GH from the first heat exchanger HX1) to the combustion chamber 114.

In the example shown in Figure 1, the hybrid system 100 is configured to direct a second stream of gaseous hydrogen GH2 (a second portion of the stream of gaseous hydrogen GH from the first heat exchanger HX1) to the fuel cell 102.

The fuel cell 102 is configured to receive the second stream of gaseous hydrogen GH2 from the first heat exchanger HX1 and the second stream of compressed air CA2 from the second heat exchanger HX2. However, compressed air may be supplied to the fuel cell 102 from other sources.

A conversion ratio of the fuel cell 102 may be in the range of 0.8-0.98, such that residual hydrogen RH is output from the fuel cell 102. As shown in the example in Figure 1, the system 100 may be configured to direct a stream of residual hydrogen RH (e.g. hydrogen that is not utilised in the fuel cell reaction) to the combustion chamber 114, and to direct a stream of residual air RA (e.g., air that is not utilised in the fuel cell reaction) to a turbine 116 of the gas turbine engine 110.

The system 100 is configured to direct a stream of hot flue gas FG, generated from the combustion of the oxygen and hydrogen therein, from the combustion chamber 114 to the turbine 116. As the combustion chamber 114 utilises oxy-fuel combustion, the hot flue gas FG is substantially composed of superheated steam.

As shown in Figure 1, the hybrid system 100 comprises a coolant circuit CC configured to absorb heat from components of the gas turbine 110 and/or the fuel cell 102 into a working fluid within the coolant circuit CC. For example, as shown in Figure 1, the coolant circuit CC is configured to convey a flow of working fluid to control the temperature of (e.g. cool) the fuel cell 102 and an electric motor 118 coupled to the gas turbine engine 110.

The coolant circuit CC comprises an ambient heat exchanger HXA. The ambient heat exchanger HXA is configured to transfer heat between the working fluid of the coolant circuit CC and the ambient atmosphere (e.g. to reject heat from the coolant circuit CC to the ambient atmosphere to cool the working fluid).

In the example shown in Figure 1, the coolant circuit CC comprises a third heat exchanger HX3. The system 100 is configured to direct the stream of gaseous oxygen GO from the second heat exchanger HX2 to the combustion chamber 114 via the third heat exchanger HX3. The third heat exchanger HX3 is configured to transfer heat between the coolant circuit CC and the stream of gaseous oxygen GO to control the temperature of (e.g. heat) the stream of gaseous oxygen GO.

In addition to generating a stream of liquid oxygen LO from the first stream of compressed air CA1, the first heat exchanger HX1 may be configured to generate a stream of gaseous nitrogen GN from the first stream of compressed air CA1. In other words, the first heat exchanger HX1 may be configured to transfer heat between the first stream of compressed air CA1 and the stream of liquid hydrogen LH to yield a stream of liquid oxygen LO, a stream of gaseous hydrogen GH, and a stream of gaseous nitrogen GN.

As shown in Figure 1, the system 100 is configured to direct the stream of gaseous nitrogen GN to the second heat exchanger HX2, and the second heat exchanger HX2 is configured to transfer heat between the stream of gaseous nitrogen GN and at least one of the other streams (e.g. the stream of liquid oxygen LO and/or the second stream of compressed air CA2) in the second heat exchanger HX2.

Alternatively or additionally, the stream of gaseous nitrogen GN may be directed to a fire suppression system 108 (e.g. for use as a fire suppression or prevention agent). For this use, the stream of gaseous nitrogen GN should contain less than 15 mol.% oxygen, which is the maximum oxygen content that can still extinguish a fire. In various embodiments, the stream of gaseous nitrogen GN may contain less than 5 mol.% oxygen, or less than 1 mol.% oxygen.

Alternatively or additionally, the stream of gaseous nitrogen GN may be directed to the tank 104 of liquid hydrogen to provide/aid in temperature control (e.g. cooling) of the tank 104. For example, the system 100 could be configured to direct the stream of gaseous nitrogen GN from the first heat exchanger HX1 to the tank 104 for temperature control of the tank 104, and then from the tank 104 to the second heat exchanger HX2, wherein the second heat exchanger HX2 is configured to transfer heat between the stream of gaseous nitrogen GN and at least one of the streams (e.g. the stream of liquid oxygen LO and/or the second stream of compressed air CA2) in the second heat exchanger HX2, and then from the second heat exchanger HX2 to the fire suppression system 108.

A method of operating the hydrogen fuel system 100 will now be described with reference to Figure 1.

Firstly, the method comprises directing a first stream of compressed air CA1 to the first heat exchanger HX1. The compressor 112 may be used to generate a stream of compressed air CA by compressing a stream of air A (for example) to approximately 2.5 bar absolute pressure. Depending on the ambient conditions, the temperature of the compressed air after leaving the compressor 112 may range from 30-220°C. Next, most (approximately 80%) of the stream of compressed air CA is diverted to an environmental control system 120. The remaining stream of compressed air is split into a first stream of compressed air CA1 (approximately 40% of the stream of compressed air CA) and a second stream of compressed air CA2 (approximately 60% of the stream of compressed air CA).

In addition to directing the first stream of compressed air CA1 to the first heat exchanger HX1, a stream of liquid hydrogen LH is directed to the first heat exchanger HX1. The stream of liquid hydrogen LH may be provided from a source of liquid hydrogen such as a tank 104. The hydrogen stored within has been cryogenically cooled to liquid state (--253°C = ~20K).

To raise the temperature of the stream of liquid hydrogen LH and evaporate it to yield a stream of gaseous hydrogen GH, the first heat exchanger HX1 transfers heat between the first stream of compressed air CA1 and the stream of liquid hydrogen LH. The first stream of compressed air CA1 is thereby cooled to condense the oxygen in the stream of compressed air and a stream of liquid oxygen LH is separated out, leaving behind a stream of gaseous nitrogen GN. The outlet temperature of the stream of liquid oxygen LO and the stream of gaseous nitrogen GN is in the range of 77.4-90.2K.

After leaving first heat exchanger HX1, the stream of gaseous hydrogen GH is split into a first portion and a second portion: a first (portion of the) stream of gaseous hydrogen GH1 is directed to the combustion chamber 114, and a second (portion of the) stream of gaseous hydrogen GH2 is directed to the fuel cell 102.

After leaving the first heat exchanger HX1, the stream of liquid oxygen LO and the stream of gaseous nitrogen GN is directed to a second heat exchanger HX2. The second stream of compressed air CA2 is also directed to the second heat exchanger HX2. Furthermore, as shown in Figure 1, the second heat exchanger HX2 is part of a coolant circuit CC.

The coolant circuit CC is arranged in a heat exchange relationship with components of the gas turbine engine and components of the fuel cell, such that the working fluid circulating in the coolant circuit CC absorbs heat from these components. Conventionally, this heat in the coolant circuit CC is rejected/transferred, in the ambient heat exchanger HXA, to a stream of ambient air AA. However, in the described example, the heat in the coolant circuit CC can be utilised in the second heat exchanger HX2. Thus, in the second heat exchanger HX2, heat is transferred between the coolant circuit CC and the streams of liquid oxygen LH, compressed air CA2, and gaseous nitrogen GN in order to yield a stream of gaseous oxygen and control and/or stabilise the temperature of each of the streams depending on its requirements.

For example, the streams of liquid oxygen LO and gaseous nitrogen GN may be used to cool the temperature of the compressed air CA2, because, to be used in the fuel cell 102, the air optimally should be in the operating range of 0-95°C. Then, the stream of gaseous oxygen GO in the second heat exchanger HX2 may be heated by the coolant circuit CC so that it is at an optimal temperature for combustion.

After leaving the second heat exchanger HX2, the stream of gaseous oxygen GO is directed to the combustion chamber 114. Thus, the gaseous oxygen GO and the gaseous hydrogen GH may be combusted in the combustion chamber 114 to yield a stream of (hot) flue gas FG. The stream of flue gas FG is directed to the turbine 116 to be utilised by the turbine 116 to generate mechanical and/or electrical power.

After leaving the second heat exchanger HX2, the stream of compressed air CA2 is directed to the fuel cell 102. The fuel cell 102 utilises the stream of compressed air CA2 and the second stream of gaseous hydrogen GH2 to generate electricity. The fuel cell conversion ratio may be in the range of 0.8-0.98, such that there is residual hydrogen from the fuel cell 102 that is not used in the fuel cell conversion process. This stream of residual hydrogen RH is directed to the combustion chamber 114. Similarly, air that is not used as part of the fuel cell conversion process is directed as a stream of residual air RA to the turbine 116.

After leaving the second heat exchanger HX2, the stream of gaseous nitrogen GN is directed to a fire suppression system 108 to be stored for use as a fire suppressant or fire prevention agent. Thus, an aircraft having the described hydrogen fuel system may not require a separate source of nitrogen for fire suppression, lowering the overall weight of the aircraft.

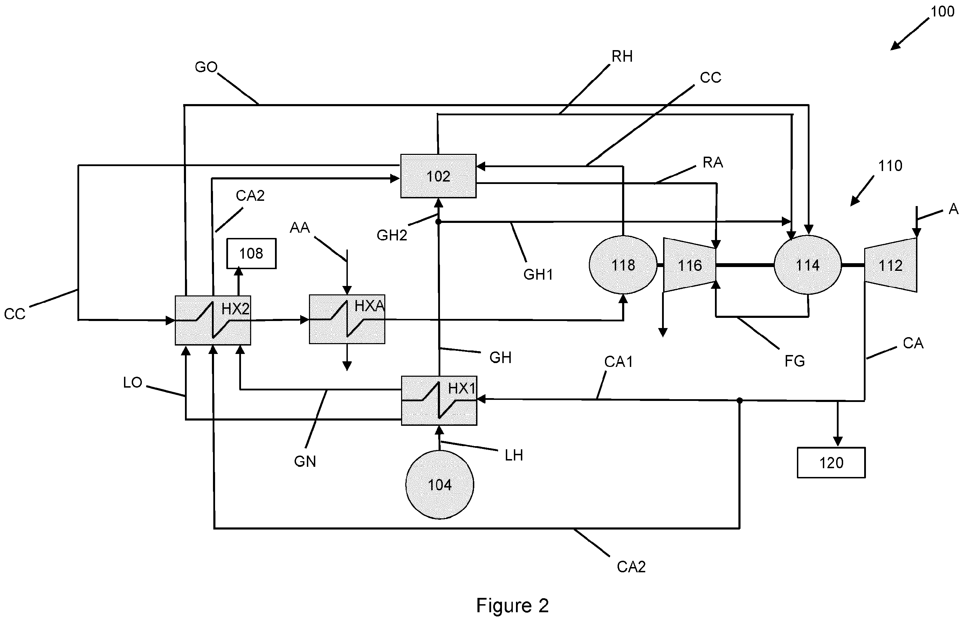

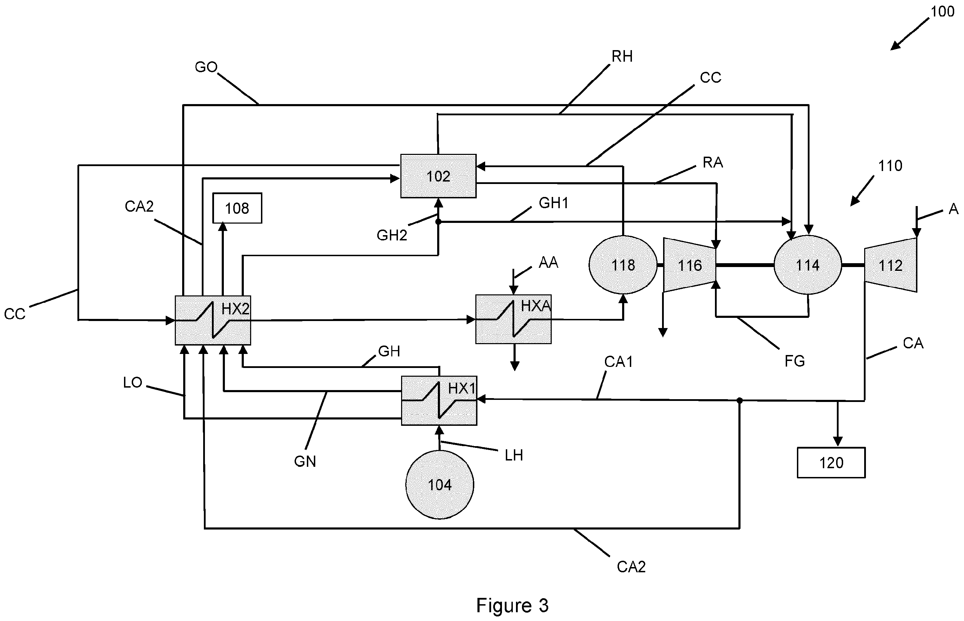

Alternative architectures for the hydrogen fuel system 100 to that shown in Figure 1 are shown in Figures 2 and 3.

In the examples shown in Figures 2 and 3, the coolant circuit CC comprises the second heat exchanger HX2. The second heat exchanger HX2 in these examples combines the functions of the second heat exchanger HX2 and the third heat exchanger HX2 in the example of Figure 1. Accordingly, the second heat exchanger HX2 is configured to transfer heat between the coolant circuit CC and at least one of the streams in the second heat exchanger HX2. For example, as shown in Figure 2, the second heat exchanger HX2 is configured to transfer heat between the coolant circuit CC and one or more of the stream of liquid oxygen LO, the second stream of compressed air CA2, and the stream of gaseous nitrogen GN.

This further simplifies the architecture of Figure 1 and is still capable of providing stable temperature for gaseous streams of air, oxygen, nitrogen and hydrogen. These embodiments therefore provide a smaller and lighter in weight solution. The same components are labelled with the same reference numerals in all of the Figures.

Additionally, in the example shown in Figure 3, the system 100 is configured to direct the stream of gaseous hydrogen GH to the second heat exchanger HX2 before the stream of gaseous hydrogen GH is split into the first portion GH1 and the second portion GH2. Alternatively, the system 100 may be configured to split the stream of gaseous hydrogen GH before directing the first portion GH1 and/or the second portion GH2 to the second heat exchanger HX2.

Thus, the second heat exchanger HX2 may be configured to transfer heat between the coolant circuit CC and one or more of the stream of liquid oxygen LO, the second stream of compressed air CA2, the stream of gaseous nitrogen GN, and the (first and/or second portion of the) stream of gaseous hydrogen GH. This example therefore provides further improved temperature control of the hydrogen provided to the combustion chamber 114 or the fuel cell 102.

In any of the examples shown in Figures 1 to 3, different types of heat exchangers HX may be used in this configuration based on the hydrogen and oxygen phase at its entrance (liquid, gas or a two-phase flow). Under different conditions a system controller may be configured to modify the system operating points, for example by controlling the liquid hydrogen, air or working fluid flow entering the heat exchangers HX through a bypass valve (not shown in the Figures). In some examples, the amount of working fluid or ambient air flowing into the fourth heat exchanger HXA may be controlled through a (bypass) valve or radiator baffle (not shown in the Figures) to ensure a proper working fluid temperature under different ambient conditions. Depending on the configuration, the heat exchangers HX may include components for moisture removal (such as a condenser, water separator and reheater) to protect from possible freezing issues.

In one example, the first heat exchanger HX1 could instead be configured to produce a stream of liquid nitrogen instead of a stream of gaseous nitrogen, where the stream of liquid nitrogen is then heated in the second heat exchanger HX2 to produce the stream of gaseous nitrogen GN.

The examples described herein and discussed with reference to Figures 1 to 3 provide a more sustainable architecture and use of oxy-fuel combustion. As a result of combusting pure oxygen and pure hydrogen, no harmful compounds such as nitrogen oxides are produced in the combustion chamber 114 and thus the described examples provide for a higher gas turbine efficiency.

Additionally, some examples are configured to produce a source of nitrogen which in turn can be used as a fire suppression agent or fire protection agent. There is therefore no need for compressed nitrogen tanks for fire suppression, which in turn results in a lower aircraft weight. Due to the cryogenic temperature of the air, air pollutants are in the solid state, meaning that the pollutant (CO₂, hydrocarbons, aromatics, etc.) separation process is significantly easier.

As can be seen in the Figures, since only one compressor 112 is needed, this results in a lower aircraft weight. Since only one turbine 116 is needed, this also results in a lower aircraft weight. Thus, the examples described herein also provide a simpler gas turbine design, that is cheaper, more reliable, has a higher energy efficiency and lower maintenance costs.

The systems described above may also comprise additional auxiliary equipment such as pumps, solid separator, dehumidifiers, valves, splitters etc, which are not shown in the Figures.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A system comprising:
a gas turbine having a combustion chamber;
a first heat exchanger configured to receive a first stream of compressed air and a stream of liquid hydrogen, wherein the first heat exchanger is configured to transfer heat between the first stream of compressed air and the stream of liquid hydrogen to yield a stream of liquid oxygen and a stream of gaseous hydrogen; and
a second heat exchanger configured to receive the stream of liquid oxygen and a second stream of compressed air, wherein the second heat exchanger is configured to transfer heat between the second stream of compressed air and the stream of liquid oxygen to yield a stream of gaseous oxygen;
wherein the system is configured to direct the stream of gaseous hydrogen and the stream of gaseous oxygen to the combustion chamber.

2. The system of claim 1, comprising a fuel cell, and wherein the system is configured to:
direct a first portion of the stream of gaseous hydrogen to the combustion chamber; and
direct a second portion of the stream of gaseous hydrogen to the fuel cell.

3. The system of claim 2, wherein the system is configured to direct a stream of residual hydrogen from the fuel cell to the combustion chamber.

4. The system of claim 2 or claim 3, wherein the system is configured to direct a stream of residual air from the fuel cell to a turbine of the gas turbine.

5. The system of any preceding claim, comprising a coolant circuit configured to absorb heat from the gas turbine and/or the fuel cell.

6. The system of claim 5, wherein the coolant circuit comprises a third heat exchanger;
wherein the system is configured to direct the stream of gaseous oxygen from the second heat exchanger to the combustion chamber via the third heat exchanger; and
wherein the third heat exchanger is configured to transfer heat between the coolant circuit and the stream of gaseous oxygen.

7. The system of claim 5, wherein the coolant circuit comprises the second heat exchanger, and wherein the second heat exchanger is configured to transfer heat between the coolant circuit and at least one of the streams in the second heat exchanger.

8. The system of any preceding claim, wherein the first heat exchanger is configured to transfer heat between the first stream of compressed air and the stream of liquid hydrogen to yield the stream of liquid oxygen, the stream of gaseous hydrogen, and a stream of gaseous nitrogen; and
wherein the system is configured to:
direct the stream of gaseous nitrogen to at least one of the source of liquid hydrogen, vehicle electronics, and turbine blades of the gas turbine, for temperature control of the at least one of the source of liquid hydrogen, vehicle electronics, and turbine blades; and/or
direct the stream of gaseous nitrogen to the second heat exchanger, wherein the second heat exchanger is configured to transfer heat between the stream of gaseous nitrogen and at least one of the streams in the second heat exchanger; and/or
direct the stream of gaseous nitrogen to a fire suppression system.

9. A method comprising:
directing a first stream of compressed air and a stream of liquid hydrogen to a first heat exchanger;
transferring heat, using the first heat exchanger, between the first stream of compressed air and the stream of liquid hydrogen to yield a stream of liquid oxygen and a stream of gaseous hydrogen;
directing the stream of liquid oxygen and a second stream of compressed air to a second heat exchanger;
transferring heat, using the second heat exchanger, between the second stream of compressed air and the stream of liquid oxygen to yield a stream of gaseous oxygen; and
directing the stream of gaseous oxygen and the stream of gaseous hydrogen to a combustion chamber of a gas turbine.

10. The method of claim 9 comprising:
directing a first portion of the stream of gaseous hydrogen from the first heat exchanger to the combustion chamber; and
directing a second portion of the stream of gaseous hydrogen from the first heat exchanger to a fuel cell.

11. The method of claim 10 comprising:
directing a stream of residual hydrogen from the fuel cell to the combustion chamber.

12. The method of claim 10 or claim 11 comprising:
directing a stream of residual air from the fuel cell to a turbine of the gas turbine.

13. The method of any of claims 9 to 12 comprising:
providing a coolant circuit configured to absorb heat from the gas turbine and/or the fuel cell, wherein the coolant circuit comprises a third heat exchanger;
directing a stream of gaseous oxygen from the second heat exchanger to the combustion chamber via the third heat exchanger; and
transferring, using the third heat exchanger, heat between the coolant circuit and the stream of gaseous oxygen.

14. The method of any of claims 9 to 12 comprising:
providing a coolant circuit configured to absorb heat from the components of the gas turbine and/or the fuel cell, wherein the coolant circuit comprises the second heat exchanger; and
transferring heat, using the second exchanger, between the coolant circuit and at least one of the streams in the second heat exchanger.

15. The method of any of claims 9 to 14 comprising:
transferring heat, using the first heat exchanger, between the first stream of compressed air and the stream of liquid hydrogen to yield a stream of liquid oxygen, a stream of gaseous hydrogen, and a stream of gaseous nitrogen; and
directing the stream of gaseous nitrogen to at least one of the source of liquid hydrogen, vehicle electronics, and turbine blades of the gas turbine, for temperature control of the at least one of the source of liquid hydrogen, vehicle electronics, and turbine blades; and/or
directing the stream of gaseous nitrogen to the second heat exchanger; and transferring heat, using the second exchanger, between the stream of gaseous nitrogen and the streams in the second heat exchanger; and/or
directing the stream of gaseous nitrogen to a fire suppression system.
